# DEMANDE DE BREVET EUROPEEN

(11) **EP 4 592 881 A1**
(43) Date de publication de la demande: **30.07.2025**
(21) Numéro de dépôt: 25153366.7
(22) Date de dépôt: 22.01.2025
(51) Int. Cl.: G06F 21/71, G06F 21/75

(54) **PROTECTION DE L'ÉCRITURE DE DONNÉES**

(30) Priorité: 26.01.2024 FR 2400758
(71) Demandeur: STMicroelectronics International N.V., 1228 Plan-les-Ouates, Geneva (CH)
(72) Inventeur: LACRUCHE, Marc, 13710 FUVEAU (FR); ORLANDO, William, 13790 PEYNIER (FR)
(74) Mandataire: Cabinet Beaumont

(57) **Abrégé**

La présente description concerne un dispositif de protection (103) d'une écriture de données dans au moins un registre (101) d'au moins un premier circuit électronique (102), ledit dispositif (103) étant adapté à stocker une première table de vérification (104) comprenant pour chacun desdits au moins un registre (1021) :
- au moins une première information (1041 ; 1042) concernant l'écriture de données dans ledit au moins un registre (1021) ; et
- au moins une deuxième information (1043) indiquant si une donnée a été écrite ou non dans ledit au moins un registre (1021).

## Description

### Domaine technique

La présente description concerne de façon générale la protection des systèmes et dispositifs électroniques, et, en particulier, la protection de la mise en oeuvre de tels systèmes et dispositifs électroniques. La présente description se rapport plus précisément à la protection contre des attaques pouvant survenir pendant l'écriture de données dans des registres.

### Technique antérieure

Les systèmes et dispositifs complexes sont généralement constitués d'un circuit de commande principal, comme un processeur, un microprocesseur, un contrôleur, un microcontrôleur, ou tout autre circuit capable d'écrire dans des registres d'un autre circuit en vue de l'exécution d'une opération, qui est adapté à commander un ou plusieurs circuits électroniques secondaires.

Lorsque le circuit principal commande un circuit secondaire, il est commun qu'il ait besoin d'écrire des données dans des registres accessibles du circuit secondaire. Une telle étape peut être sensible aux attaques par injection de fautes, pendant lesquelles un dispositif tiers peut, par exemple, modifier les données en cours d'écriture. De même, une telle étape peut être sensible aux fautes pouvant se manifester naturellement pendant le fonctionnement des circuits principal et secondaire.

Il serait souhaitable de pouvoir améliorer, au moins en partie, certains aspects de la protection de l'écriture de données dans des registres.

### Résumé de l'invention

Il existe un besoin pour des procédés d'écriture de données plus sécurisés.

Il existe un besoin pour des procédés d'écriture de données protégés contre les attaques par injection de fautes.

Un mode de réalisation pallie tout ou partie des inconvénients des procédés connus d'écriture de données.

Un mode de réalisation pallie tout ou partie des inconvénients des dispositifs électroniques connus permettant de protéger l'écriture de données.

Un mode de réalisation prévoit un dispositif électronique adapté à vérifier l'exécution d'un procédé d'écriture de données.

Un mode de réalisation prévoit un procédé de protection d'un procédé d'écriture de données.

Ces deux modes de réalisation prévoient la mise en oeuvre de différents tests et l'utilisation d'une table de vérification.

Un mode de réalisation prévoit un dispositif de protection d'une écriture de données dans au moins un registre d'au moins un premier circuit électronique, ledit dispositif étant adapté à stocker une première table de vérification comprenant pour chacun desdits au moins un registre :
- au moins une première information concernant l'écriture de données dans ledit au moins un registre ; et
- au moins une deuxième information indiquant si une donnée a été écrite ou non dans ledit au moins un registre.

Un autre mode de réalisation prévoit un procédé de protection d'une écriture de données dans au moins un registre d'au moins un circuit électronique, mis en oeuvre par un dispositif de protection adapté à stocker une première table de vérification comprenant pour chacun desdits au moins un registre :
- une première information concernant l'écriture de données dans ledit au moins un registre ; et
- une deuxième information indiquant si une donnée a été écrite ou non dans ledit au moins un registre.

Selon un mode de réalisation, ladite première information indique si une écriture de données est requise dans ledit au moins un registre.

Selon un mode de réalisation, ladite première table de vérification comprend, pour chacun desdits au moins un registre, une troisième information concernant l'écriture de données dans ledit au moins un registre.

Selon un mode de réalisation, ladite troisième information indique si une écriture de données est autorisée dans ledit au moins un registre.

Selon un mode de réalisation, ladite première table de vérification comprend, pour chacun desdits au moins un registre, une quatrième information concernant l'écriture de données dans ledit au moins un registre.

Selon un mode de réalisation, ladite quatrième information indique :
- si la valeur de ladite donnée à écrire est autorisée ou non ;
- si ladite donnée à écrire est prioritaire ou non ; ou
- si ladite donnée à écrire est temporaire ou permanent.

Selon un mode de réalisation, ladite première table de vérification est adaptée à être utilisée pendant une écriture de donnée comprise dans la mise en oeuvre d'une première instruction par un processeur.

Selon un mode de réalisation, ledit dispositif comprend, en outre, une deuxième table de vérification.

Selon un mode de réalisation, ladite deuxième table de vérification est adaptée à être utilisée pendant une écriture de donnée comprise dans la mise en oeuvre d'une deuxième instruction par ledit processeur, différente de la première instruction.

Selon un mode de réalisation, le dispositif ou le procédé, décrit précédemment, protège, en outre, une écriture de données dans au moins un registre d'au moins un deuxième circuit électronique, différent dudit premier circuit électronique.

Selon un mode de réalisation, ledit premier circuit est adapté à modifier ladite première table de vérification.

Un mode de réalisation prévoit un système comprenant ledit au moins un premier circuit électronique, et un circuit de commande.

Un autre mode de réalisation prévoit un procédé d'écriture de données dans au moins un registre d'au moins ledit au moins un premier circuit électronique comprenant la mise en oeuvre du procédé de protection décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un système électronique ;
la figure 2 représente un mode de mise en oeuvre d'un procédé de protection d'un procédé d'écriture de données exécuté au sein du dispositif de la figure 1 ; et
la figure 3 représente des tableaux illustrant le mode de mise en oeuvre de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures

Sauf précision contraire, les expressions "environ", "approximativement", "sensiblement", et "de l'ordre de" signifient à 10 % près, de préférence à 5 % près.

Les modes de réalisation décrits ci-après concernent la protection de l'écriture de données dans des registres d'un dispositif électronique. Dans les systèmes électroniques complexes, il est courant qu'un circuit électronique principal, comme un processeur, ait besoin, pour la mise en oeuvre d'instructions, d'écrire des données dans des registres de circuits électroniques secondaires. Un problème que se proposent de résoudre les modes de réalisation est d'assurer une écriture correcte des données dans ces registres. En effet, différents types d'attaque peuvent être mises en oeuvre pendant une telle opération d'écriture, comme une attaque par injection de faute, qui peuvent entraîner l'écriture de données dans des registres non autorisées, la non-écriture de données dans des registres, ou encore l'écriture de données incorrectes dans des registres.

Les modes de réalisation décrits ci-après proposent la mise en oeuvre d'une table de vérification pendant l'opération d'écriture, permettant d'assurer la mise en oeuvre correcte de cette opération, que ce soit pour prévenir une attaque malveillante ou pour vérifier la robustesse d'une opération d'écriture de données. Ces modes de réalisation permettent, plus particulièrement, de vérifier que toutes les données nécessaires à la mise en oeuvre d'un circuit ont été correctement fournies à ce circuit.

Les modes de réalisation décrits ci-après peuvent s'appliquer à tout types de systèmes électroniques complexes, comme les ordinateurs. En particulier, ces modes de réalisation sont préférentiellement appliqués aux domaines des systèmes électroniques embarqués dans les véhicules, comme les véhicules automobiles, mais aussi le domaine des bus de communication industriels.

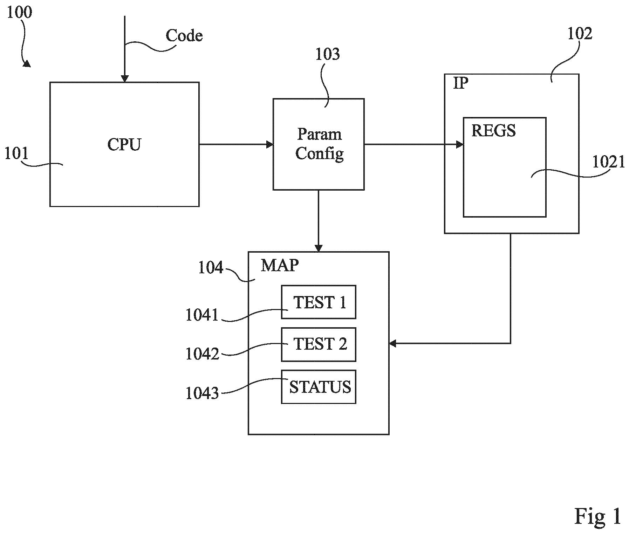

La figure 1 représente, très schématiquement et sous forme de blocs, un système électronique 100 selon un mode de réalisation.

Le système électronique 100 comprend un circuit de commande principal 101 (CPU) et au moins un circuit électronique secondaire 102 (IP).

Le circuit de commande principal 101 est, par exemple, un processeur, un microprocesseur, un contrôleur, un microcontrôleur, etc. Selon un mode de réalisation, le circuit de commande 101 est adapté à recevoir des codes de programmation Code et à les traduire en une ou plusieurs instructions pour mettre en oeuvre le circuit électronique secondaire 102.

Le circuit électronique secondaire 102 est un circuit adapté à mettre en oeuvre une fonction particulière, comme un processeur dédié, un circuit de mesure, un circuit de commande particulier, etc. Le circuit 102 comprend au moins un registre 1021 (REGS), de préférence plusieurs registres 1021, permettant de stocker des données, comme des données de configuration et/ou des données permettant la mise en oeuvre du circuit. Selon un mode de réalisation, lorsque le circuit principal 101 met en oeuvre une instruction concernant le circuit secondaire 102 il doit, généralement, mettre à jour tout ou partie des données stockées dans les registres 1021.

Pour réaliser une opération d'écriture de données dans les registres 1021 de manière protégée, le système 100 comprend, en outre, un dispositif de protection 103 (Param Config). Le dispositif 103 est adapté à protéger une écriture de données dans le ou les registres 1021 du circuit 102. Plus particulièrement, le dispositif 103 est adapté à vérifier si une écriture de données, pour la mise en oeuvre d'une instruction par le circuit de commande principal 101, est effectuée correctement.

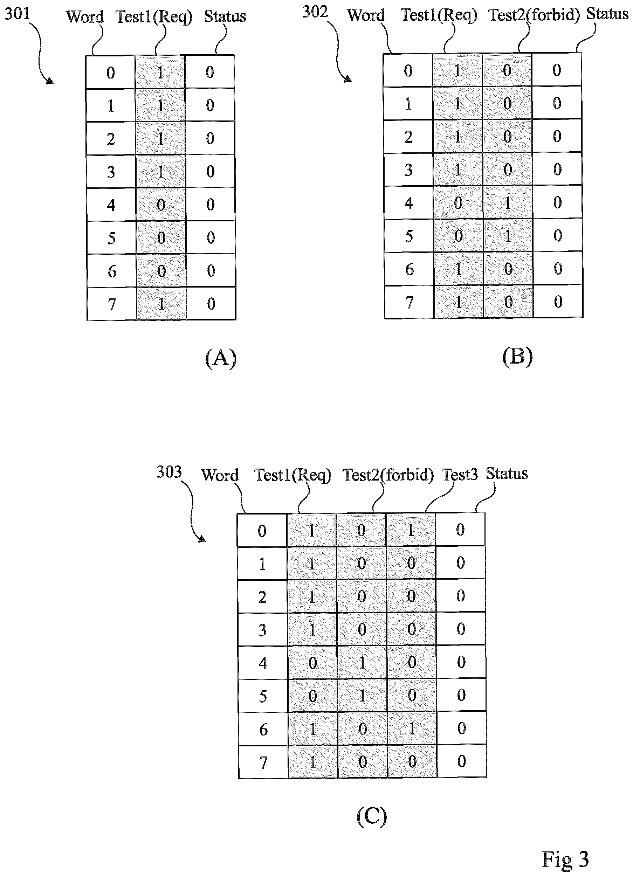

Pour cela, le dispositif 103 est adapté à stocker une ou plusieurs tables de vérification 104 (MAP). La table de vérification 104 permet de vérifier si l'écriture de données dans les registres 1021 est effectuée de façon correcte. Plus particulièrement, la table de vérification 104 comprend, pour chaque registre des registres 1021, au moins une information 1041 (TEST 1), 1042 (TEST 2) concernant l'écriture de données dans le registre, et une information 1043 (STATUS) indiquant si une donnée a été écrite dans le registre. Selon un exemple, les informations 1041 et 1042 peuvent indiquer s'il est autorisé ou non d'écrire dans un registre, s'il est requis ou non d'écrire dans un registre. Selon un autre exemple, les informations 1041 et 1042 peuvent permettre de tester la donnée à écrire dans un registre, ou de définir un ordre de priorité d'écriture dans les registres. Des exemples détaillés de tables de vérification sont décrits en relation avec la figure 3. Selon un exemple, le circuit 102 est adapté à mettre à jour la ou les tables de vérification 104, par exemple à la suite de l'exécution d'une première opération.

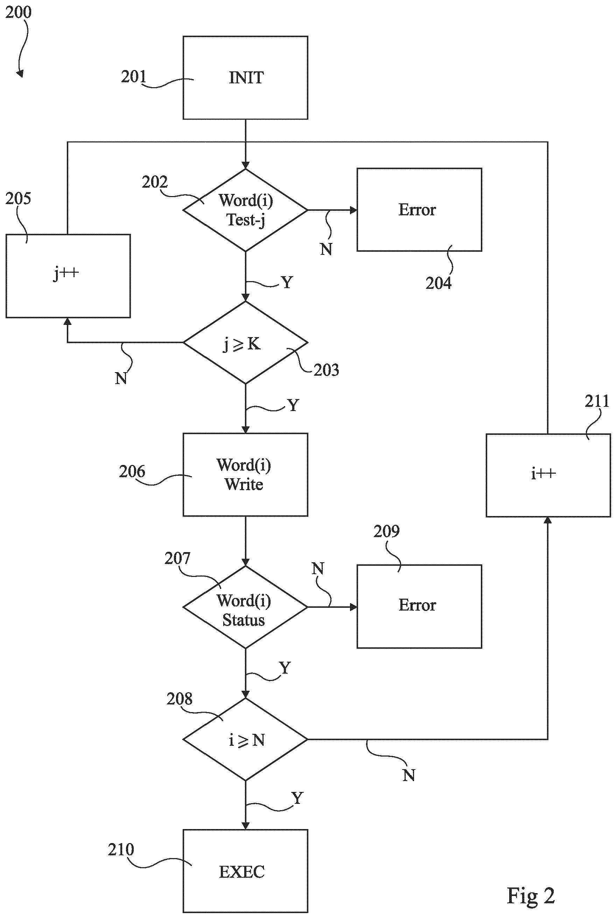

Un mode de mise en oeuvre du dispositif 103, et du procédé de protection associé, est décrit en relation avec la figure 2.

Selon un mode de réalisation, le dispositif 103 peut comprendre plusieurs tables de vérification 104 associées à l'écriture de données dans le circuit secondaire 102, chaque table de vérification 104 étant associée à une instruction particulière mise en oeuvre par le circuit de commande principal 101 et par le circuit secondaire 102. En effet, les informations 1041 et 1042 peuvent être différente en fonction du type d'instruction mise en oeuvre par le circuit de commande principal 101.

De plus, le système 100 peut comprendre plusieurs circuits électroniques secondaires 102 du type du circuit 102. Il est possible, dans ce cas, que le dispositif 103 permettent de protéger l'écriture de données dans le ou les registres de plusieurs circuits secondaires 102 différents. Pour cela, le dispositif 103 peut, par exemple, utiliser une même table de vérification 104 pour plusieurs circuits secondaires 102 différents, ou comprendre plusieurs tables de vérification 104 associées chacune à un ou plusieurs circuits secondaires 102 différents.

Selon un premier mode de réalisation, le dispositif 103 est un dispositif indépendant du circuit de commande principal 101 et du circuit secondaire 102. Selon un deuxième mode de réalisation, le dispositif 103 fait partie du circuit de commande principal 101. Selon un troisième mode de réalisation, le dispositif 103 fait partie du circuit secondaire 102.

La figure 2 est un schéma bloc illustrant un procédé de protection 200 d'écriture de données dans des registres de circuits électroniques mis en oeuvre, au sein du système 100 décrit en relation avec la figure 1, par le dispositif 103.

On considère ici que le circuit électronique 102 comprend N registres Reg(i), N étant un entier supérieur ou égal à un, et i étant un entier compris entre 1 et N, dans lequel le circuit de commande principal 101 souhaite écrite N mots de données Word(i).

De plus, on considère que la table de vérification 104 comprend, pour chaque registre, K informations Test-j relatives à l'écriture de données dans un registre Reg(i), K étant un entier supérieur ou égal à un, et j étant un entier compris entre 1 et K. Dit autrement, l'écriture d'un mot de donnée Word(i) dans un registre Reg(i) est effectuée si les K informations sont vérifiées.

A une étape initiale 201 (INIT), le circuit de commande 101 a reçu un code de programmation Code, et souhaite mettre en oeuvre une instruction en écrivant des données Word(i) dans les registres Reg(i) du circuit 102. Dans la table de vérification 104, toutes les informations indiquant si une donnée a été écrite dans les registres Reg(i) ont été réinitialisées pour indiquer qu'aucune donnée n'est écrite dans les registres Reg(i). Selon un exemple, par convention, si l'information indiquant si une donnée a été écrite dans un registre Reg(i) est une donnée binaire, sa valeur est alors rendue égale à zéro.

A une étape 202 (Word(i) Test-j), suivant l'étape 201, l'information Test-j associée au mot de donnée Word(i) est vérifiée. Si le test est concluant (sortie Y du bloc 202), l'étape suivante est une étape 203 (j>=K), sinon (sortie N du bloc 202), l'étape suivante est une étape 204 (Error).

A l'étape 203, suivant l'étape 202, la valeur de l'entier j est comparée à la valeur de l'entier K. Si l'entier j est supérieur ou égal à l'entier K (sortie Y du bloc 203), l'étape suivante est une étape 206 (Word(i) Write), sinon (sortie N du bloc 203), l'étape suivante est une étape 205 (j++).

A l'étape 204, suivant l'étape 202, l'information Test-j associée au mot de donnée Word(i) n'est pas vérifiée. Cela peut indiquer qu'une erreur s'est produite ou qu'une attaque a eu lieu pendant l'envoi des données au circuit 102. Un message d'erreur est, par exemple, envoyé au circuit de commande principal 101 et/ou au circuit secondaire 102. Selon un exemple, le message d'erreur peut être différent en fonction de l'information Test-j vérifiée. Selon un premier exemple, si une information Test-j n'est pas vérifiée alors le procédé de protection empêche toute écriture de données dans les registres Reg(i). Selon un deuxième exemple, si une information Test-j n'est pas vérifiée alors le procédé de protection empêche l'écriture de la donnée Word(i) concernée dans le registre Reg(i) qui lui est associée.

De plus, à l'étape 204, selon un exemple, la valeur de l'entier j peut être réinitialisée, c'est-à-dire remise à un.

Dit autrement, pendant les étapes 202 à 205, les informations Test-1 à Test-K associées au mot de données Word(i) sont toutes vérifiées une à une. Si une information Test-j n'est pas vérifiée, un message d'erreur peut être envoyé.

A l'étape 205, la valeur de l'entier j est incrémentée d'une unité, par exemple de un.

A l'étape 206, suivant l'étape 203, toutes les informations Test-1 à Test-K associée au mot de donnée Word(i) ont été vérifiées. Ainsi, le mot de donnée Word(i) peut être écrit dans le registre Reg(i).

A une étape 207 (Word(i) Status), suivant l'étape 206, l'information indiquant si une donnée a été écrite dans un registre Reg(i) est modifiée pour indiquer qu'une donnée y est écrite. De plus, avant de modifier la valeur de cette information, il est vérifié si elle indiquait bien qu'aucune donnée n'était écrite dans le registre. Si le test est concluant (sortie Y du bloc 207), l'étape suivante est une étape 208 (i>=N), sinon (sortie N du bloc 207), l'étape suivante est une étape 209 (Error).

A l'étape 208, suivant l'étape 202, la valeur de l'entier i est comparée à la valeur de l'entier N. Si l'entier i est supérieur ou égal à l'entier N (sortie Y du bloc 208), l'étape suivante est une étape 210 (EXEC), sinon (sortie N du bloc 208), l'étape suivante est une étape 211 (i++).

A l'étape 209, suivant l'étape 207, l'information indiquant qu'un mot de donnée a été écrit dans un registre n'a pas vu sa valeur modifiée. Cela peut indiquer qu'une erreur s'est produite ou qu'une attaque a eu lieu pendant l'envoi des données au circuit 102. Un message d'erreur est, par exemple, envoyé au circuit de commande principal 101 et/ou au circuit secondaire 102. Selon un premier exemple, si cette information n'est pas vérifiée alors le procédé de protection empêche toute écriture de données dans les registres Reg(i). Selon un deuxième exemple, si cette information n'est pas vérifiée alors le procédé de protection empêche l'écriture du mot de donnée Word(i) concerné dans le registre Reg(i) qui lui est associée. Selon un troisième exemple, aucun message d'erreur n'est envoyé pour éviter de fournir des informations à un possible attaquant.

De plus, à l'étape 209, selon un exemple, la valeur de l'entier i peut être réinitialisée, c'est-à-dire remise à un.

A l'étape 211, suivant l'étape 208, la valeur de l'entier i est incrémentée d'une unité, par exemple de un.

A l'étape 210, suivant l'étape 208, l'entier i est supérieur ou égal à l'entier N, cela indique que tous les mots de données Word(i) ont été écrits dans les registres Reg(i). L'instruction que souhaite mettre en oeuvre le circuit de commande principal 101 peut continuer sa mise en oeuvre.

Un avantage de ce procédé de protection, et du dispositif de protection 103 le mettant en oeuvre, est qu'il permet de vérifier l'écriture de chaque mot de données Word(i) dans un registre Reg(i).

Selon un mode de réalisation, le procédé de protection 200 peut, en outre, faire partie d'un procédé d'écriture de données dans des registres.

Par ailleurs, dans l'exemple de la figure 2, il est envisagé que l'écriture des mots se fait dans l'ordre des mots de données. Cependant, à titre de variante, on peut envisager que les requêtes d'écriture des mots de données Word(i) et l'écriture des mots de données Word(i) sont réalisées dans un premier ordre, et que la vérification des statuts des mots de données Word(i) écrits est réalisée dans un second ordre différent du premier.

De même, dans l'exemple de la figure 2, il est envisagé que l'exécution de l'opération a lieu après la vérification des statuts des mots de données Word(i) écrits, mais on peut aussi envisager que cette exécution ait lieu avant cette vérification.

La figure 3 comprend trois vues (A), (B), et (C) illustrant chacune un exemple 301, 302 et 303 de la table de vérification 104 décrite en relation avec la figure 1, et utilisée par le procédé de protection 200 décrit en relation avec la figure 2.

Chaque table de vérification 301 à 303 a un nombre de lignes correspondant au nombre de registres du circuit 102. Dans l'exemple de la figure 3, chaque table de vérification comprend huit lignes. Dans l'exemple de la figure 2, chaque table de vérification comprend N lignes.

Chaque table de vérification 301 à 303 comprend une première colonne Word (à gauche en figure 3) recensant les indices des mots de données et de leur registres associés. Selon un premier exemple, cette première colonne Word n'est pas indispensable à la réalisation des modes de réalisation, l'indice des mots de données pouvant être simplement vérifié avec l'indice de la ligne de la table de vérification. Selon un deuxième exemple, la première colonne Word pourrait comprendre les indices des mots dans un ordre différent de l'ordre croissant classique, cela pourrait permettre de définir un ordre d'écriture des mots de données, ou de simplement sécuriser l'écriture des mots de données en masquant l'ordre des mots de données à écrire.

Chaque table de vérification 301 à 303 comprend une dernière colonne Status (à droite en figure 3) dans laquelle sont stockées, pour chaque registre, l'information indiquant si un mot de donnée est écrit dans le registre.

Dans l'exemple de la vue (A), la table de vérification 301 comprend une colonne Test1(Req) dans laquelle sont stockées, pour chaque registre, une information concernant l'écriture de données pour ledit registre. Plus particulièrement, cette information peut indiquer si un mot de donnée est requis dans le registre et/ou si l'écriture d'un mot de donnée dans ledit registre est autorisée ou non.

Dans l'exemple de la vue (B), la table de vérification 302 comprend deux colonnes Test1(Req) et Test2(Forbid), dans lesquelles sont stockées, pour chaque registre, deux informations concernant l'écriture de données pour ledit registre. Selon un mode de réalisation préféré, la première colonne Test1(Req) stocke des informations indiquant si l'écriture d'une donnée est requise, ou non, dans le registre associé. Selon un mode de réalisation préféré, la deuxième colonne Test2(Forbid) stocke des informations indiquant si l'écriture d'une donnée est autorisée, ou non, dans le registre associé.

Dans l'exemple de la vue (C), la table de vérification 303 comprend trois colonnes Test1(Req), Test2(Forbid) et Test3. Selon un exemple, les colonnes Test1(Req) et Test2(Forbid) sont les mêmes que celles de la table de vérification 302.

Selon un premier mode de réalisation, la troisième colonnes Test3 stocke, pour chaque registre, une information indiquant si une valeur de donnée particulière est attendue lors de l'écriture. Dans ce cas, la valeur du mot de données à écrire est comparée à la valeur de l'information. Selon un exemple, cette information pourrait être soit une valeur, soit une donnée masquée, ou un masque, dont certains bits représentent l'information.

Selon un deuxième mode de réalisation, la troisième colonnes Test3 stocke, pour chaque registre, une information indiquant si une valeur de donnée particulière est proscrite lors de l'écriture, comme par exemple la valeur nulle. Dans ce cas, la valeur du mot de données à écrire est comparée à la valeur de l'information. Selon un exemple, cette information pourrait être soit une valeur, soit une donnée masquée, ou un masque, dont certains bits représentent l'information.

Selon un troisième mode de réalisation, la troisième colonnes Test3 stocke, pour chaque registre, une information indiquant un ordre de priorité d'un mot de données à écrire dans le registre.

Selon un quatrième mode de réalisation, la troisième colonnes Test3 stocke, pour chaque registre, une information indiquant un ordre de priorité d'un mot de données à écrire dans le registre.

Selon un cinquième mode de réalisation, la troisième colonnes Test3 stocke, pour chaque registre, une information indiquant si le mot de données à écrire dans le registre est à écrire de façon permanente ou temporaire.

Selon un sixième mode de réalisation, la troisième colonnes Test3 stocke, pour chaque registre, une information indiquant le nombre de registres nécessaires à la réalisation d'une opération, ou, par exemple, indiquant, en fonction d'une information d'un autre registre, le nombre de registres nécessaires à la réalisation de l'opération.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif de protection (103) d'une écriture de données dans au moins un registre (101 ; Reg(i)) d'au moins un premier circuit électronique (102), ledit dispositif (103) étant adapté à stocker une première table de vérification (104) comprenant pour chacun desdits au moins un registre (1021 ; Reg(i)) :
- au moins une première information (1041 ; 1042) concernant l'écriture de données dans ledit au moins un registre (1021 ; Reg(i)) ; et
- au moins une deuxième information (1043) indiquant si une donnée a été écrite ou non dans ledit au moins un registre (1021 ; Reg(i)).

2. Procédé de protection (200) d'une écriture de données dans au moins un registre (1021 ; Reg(i)) d'au moins un circuit électronique, mis en oeuvre par un dispositif de protection (103) adapté à stocker une première table de vérification (104) comprenant pour chacun desdits au moins un registre (1021 ; Reg(i)) :
- une première information (1041 ; 1042) concernant l'écriture de données dans ledit au moins un registre (1021 ; Reg(i)) ; et
- une deuxième information (1043) indiquant si une donnée a été écrite ou non dans ledit au moins un registre (1021 ; Reg(i)).

3. Dispositif selon la revendication 1, ou procédé selon la revendication 2, dans lequel ladite première information (1041 ; 1042) indique si une écriture de données est requise dans ledit au moins un registre (1021 ; Reg(i)).

4. Dispositif selon la revendication 1 ou 3, ou procédé selon la revendication 2 ou 3, dans lequel ladite première table de vérification (104) comprend, pour chacun desdits au moins un registre (1021 ; Reg(i)), une troisième information concernant l'écriture de données dans ledit au moins un registre (1021 ; Reg(i)).

5. Dispositif ou procédé selon la revendication 4, dans lequel ladite troisième information indique si une écriture de données est autorisée dans ledit au moins un registre (1021 ; Reg(i)).

6. Dispositif selon l'une quelconque des revendications 1, 3 à 5, ou procédé selon l'une quelconque des revendications 2 à 5, dans lequel ladite première table de vérification (104) comprend, pour chacun desdits au moins un registre (1021 ; Reg(i)), une quatrième information concernant l'écriture de données dans ledit au moins un registre (1021 ; Reg(i)).

7. Dispositif ou procédé selon la revendication 6, dans lequel ladite quatrième information indique :
- si la valeur de ladite donnée à écrire est autorisée ou non ;
- si ladite donnée à écrire est prioritaire ou non ; ou
- si ladite donnée à écrire est temporaire ou permanent.

8. Dispositif selon l'une quelconque des revendications 1, 3 à 7, ou procédé selon l'une quelconque des revendications 2 à 7, dans lequel ladite première table de vérification (104) est adaptée à être utilisée pendant une écriture de donnée comprise dans la mise en oeuvre d'une première instruction par un processeur.

9. Dispositif selon l'une quelconque des revendications 1, 3 à 8, ou procédé selon l'une quelconque des revendications 2 à 8, dans lequel ledit dispositif comprend, en outre, une deuxième table de vérification.

10. Dispositif ou procédé selon les revendications 8 et 9, dans lequel ladite deuxième table de vérification est adaptée à être utilisée pendant une écriture de donnée comprise dans la mise en oeuvre d'une deuxième instruction par ledit processeur, différente de la première instruction.

11. Dispositif selon l'une quelconque des revendications 1, 3 à 10, ou procédé selon l'une quelconque des revendications 2 à 10, protégeant, en outre, une écriture de données dans au moins un registre (1021 ; Reg(i)) d'au moins un deuxième circuit électronique, différent dudit premier circuit électronique (102).

12. Dispositif selon l'une quelconque des revendications 1, 3 à 11, ou procédé selon l'une quelconque des revendications 2 à 11, dans lequel ledit premier circuit (102) est adapté à modifier ladite première table de vérification (104).

13. Système électronique comprenant un dispositif selon l'une quelconque des revendications 1, 3 à 12, ledit au moins un premier circuit électronique (102), et un circuit de commande (101).

14. Procédé d'écriture de données dans au moins un registre (1021 ; Reg(i)) d'au moins ledit au moins un premier circuit électronique (102) comprenant la mise en oeuvre du procédé de protection (200) selon l'une quelconque des revendications 2 à 12.
